# EUROPEAN PATENT SPECIFICATION

(11) **EP 0 743 346 B1**
(45) Date of publication and mention of the grant of the patent: **14.06.2000**
(21) Application number: 96303399.8
(22) Date of filing: 14.05.1996
(51) Int. Cl.: C09D 11/00

(54) **Waterfast inks for ink jet printing**
Wasserfeste Tinten für den Tintenstrahldruck
Encre résistante à l'eau pour l'impression à jet d'encre

(30) Priority: 18.05.1995 US 443932
(43) Date of publication of application: 20.11.1996
(73) Proprietor: Scitex Digital Printing, Inc., Dayton, Ohio 45420-4099 (US)
(72) Inventor: Botros, Raouf, Centerville, Ohio 45459 (US); Chavan, Sunita, Vandalia, Ohio 45377 (US)
(74) Representative: Hillier, Peter

(56) References cited:
- US-A- 4 197 135
- US-A- 4 269 627
- US-A- 4 659 382
- US-A- 5 364 462

## Description

### Technical Field

The present invention relates to aqueous liquid inks which are waterfast when applied and, more particularly, to enhancement in waterfastness of ink jet inks by adding water soluble organic solvents to the ink.

### Background Art

In continuous ink jet printing, ink is supplied under pressure to a manifold region that distributes the ink to a plurality of orifices, typically arranged in a linear array(s). The ink discharges from the orifices in filaments which break into droplet streams. The approach for printing with these droplet streams is to selectively charge and deflect certain drops from their normal trajectories. Graphic reproduction is accomplished by selectively charging and deflecting drops from the drop streams and depositing at least some of the drops on a print receiving medium while other of the drops strike a drop catcher device. The continuous stream ink jet printing process is described, for example, in U.S. Pat. Nos. 4,255,754; 4,698,123 and 4,751,517.

In the ink jet printing art, water soluble dyes are desirable for runnability. However, waterfast inks are highly desirable for producing permanent images. Decreasing the solubility of the dye increases the waterfastness, and vice versa. Achieving improvement in waterfastness of ink jet inks remains a top priority. A waterfast ink is highly desired for publishing and documentation, including in the lottery industry, to prevent alteration of information on such documents.

One means for improving waterfastness is to use polymers and resins in inks to enhance adhesion of the dye to substrates. However, presence of resins in inks adversely affects machine runnability due to formation of deposits on orifice plates and charge plate buildup. In commonly assigned, co-pending application Serial No. , filed December 12, 1994, entitled WATERFAST DYES FOR MAKING INK JET PERMANENT INKS, the polymer is an integral part of the dye molecular structure. Therefore, when the polymer cures on the surface, it fixes the dye with it and the ink becomes waterfast. The cationic polymer interacts with the anionic dye to form a less soluble derivative of the dye.

In commonly assigned U.S. Patent Serial No. 08/204,479, to issue on June 20, 1995, a waterfast ink comprising a liquid vehicle, a dye, and a branched N-hydroxyalkyl polyethyleneimine polymer substituted at about 80% of the available nitrogens is disclosed. The use of hydroxyethylated polyethylene imine and the like in the ink showed significant improvement in waterfastness from a range of 40-60% to a range of 70-95%, depending on the substrate and the dye in the ink. One drawback with this technology, however, is the need to use a minimum of 2% of the hydroxyethylated polymer in order to achieve this waterfastness.

In general, the best running inks are those of very water soluble components which are free of any polymers or resins. Polymeric materials tend to concentrate in inks and on orifices, and this may lead to their premature curing or interaction with other components in the ink to form an insoluble derivative of the dye. For example, although hydroxyethylated polyethylene imine is very water soluble, a small portion of it tends to interact with the anionic dye prematurely to form insoluble residue.

It is seen then that there is a need for improved waterfast ink for use in ink jet recording equipment.

### Summary of the Invention

This need is met by the waterfast ink composition according to the present invention,
wherein enhancement in waterfastness of ink jet inks was achieved by adding specific water soluble organic solvents to the ink.

In accordance with one embodiment of the present invention, an ink composition comprises a liquid vehicle, a dye, a polymer, and at least one water soluble organic solvent for enhancement of waterfastness. The ink preferably comprises 1% hydroxyethylated polyethyleneimine to which is added 2% N-methyl-pyrrolidone, to increase the waterfastness of the ink to a level greater than 90%.

Other objects and advantages of the invention will be apparent from the following description and the appended claims.

### Brief Description of the Drawing

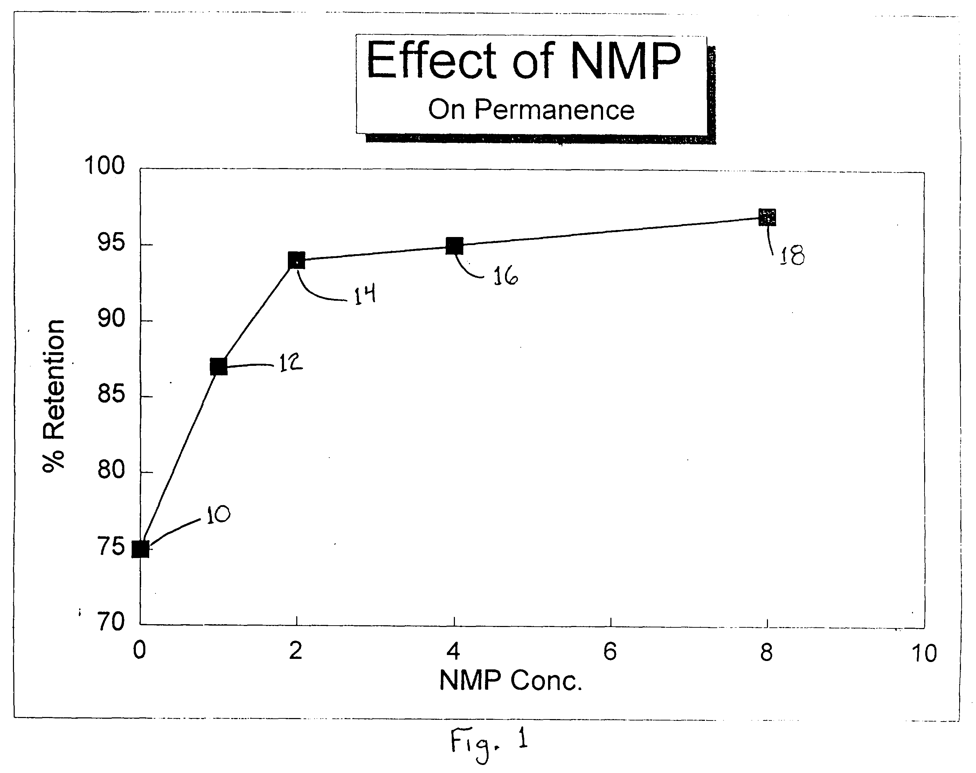

Fig. 1 is a graphical representation illustrating the effect of adding a water soluble solvent, in accordance with the present invention, on image permanence.

### Detailed Description of the Invention

The ink jet ink composition of the present invention comprises a liquid vehicle, a dye, a polymer, and at least one water soluble organic solvent. It has heretofore been observed that the best running inks are those of very water soluble components which are free of any polymers or resins. Polymeric materials tend to concentrate in inks and on orifices, and this may lead to their premature curing or interaction with other components in the ink to form an insoluble derivative of the dye. Normally, it is preferred that this insoluble formation happens on the substrate upon drying of the image and not while the ink is circulating in the printer.

Although hydroxyethylated polyethylene imine is very water soluble, a small portion of it tends to interact with the anionic dye prematurely to form insoluble residue. This is confirmed by an approximately 5% drop in absorbance after 2% of the polymer is added to the dye solution. When only 1% of the polymer is added, the drop in absorbance is insignificant. However, the waterfastness of the ink correspondingly drops by about 20%. The ink with 1% polymer has excellent runnability in the ink jet printer.

In accordance with the present invention, adding 2% N-methyl-pyrrolidone (NMP) to the ink which had only 1% polymer, the waterfastness increased to a level greater than 90%, as compared to the same ink composition without NMP. This indicates that the addition of NMP significantly increased the waterfastness of the ink. This is, in fact, a totally unexpected result, since NMP is known to be a good water soluble organic solvent. Its usage in ink jet inks has been documented in the patent literature as a dye solubilizer and a humectant, e.g., U.S. Pat. Nos. 4,842,646; 5,100,471; 5,296,023; and 5,389,131. It was also determined that the addition of NMP to ink containing no polymer had no effect on waterfastness, indicating that the combination of a polymer and a water soluble organic solvent resulted in the significant increase in waterfastness.

Referring now to Fig. 1, there is illustrated a graphical representation of the effect on waterfastness of adding a water soluble solvent, specifically NMP, to an ink containing 1% polymer. The polymer preferably comprises hydroxyethylated polyethyleneimine (PEI). As can be seen in the graph, with 0% NMP concentration added to the ink, as indicated by point 10, the % retention was approximately 75%. Addition of just 1% NMP concentration, indicated by point 12, noticeably increased the waterfastness to approximately 87%. However, an NMP concentration of 2% significantly increased the % retention to almost 95%, as indicated at point 14. Additional NMP concentrations continues to increase the waterfastness, as indicated by points 16 and 18, but not at the dramatic rate observed from 0% to 2% addition of NMP.

In a preferred embodiment of the present invention, the ink composition comprises 1% hydroxyethylated polyethyleneimine to which is added 2% N-methyl-pyrrolidone, to increase the waterfastness of the ink to levels greater than 90%.

The liquid vehicle in the ink jet ink composition of the present invention comprises an amine, preferably alkyl- and alkanol-substituted amines such as dimethylethanolamine, triethanolamine, diethylethanolamine and the like. Other additives that are optionally included in the vehicle of the invention include a corrosion inhibitor in an amount from 0 to 0.2 wt. % such as an alkanolamine; and a wetting agent of from 0 to 1 wt. %, such as an ethoxylated glycol ether; and a lower aliphatic alcohol having one hydroxy group and up to five carbon atoms in a straight or branched chain in an amount of 0 to 10 wt. %; and a biocide from 0 to 0.5 wt. % such as dehydroacetic acid. The ink may also include an optional defoamer such as phosphate esters, silicone or non-silicone defoamer or acetylenic diol.

The dye in the ink jet ink composition of the present invention is water soluble and preferably selected from the group consisting of Direct Dyes, Acid Dyes and Food Dyes. In general, the concentration of the dye should be between about 2% and 4% by weight.

Other solvents such as sulfolane, N,N-Dimethylformamide (DMF) and dimethyl sulfoxide were tried in combination with the hydroxyethylated PEI. There was some gain in waterfastness observed, but not to the extent achieved by adding NMP.

In accordance with the present invention, any suitable dyes may be used to prepare the dye concentrate which can be used to formulate IR scannable ink, including Sulphur Black 2; other black inks such as Direct Black 19 (DB-19); primary color dyes such as commercially available dyes PRO-JET CYAN 1 LIQUID, PRO-JET MAGENTA 1 LIQUID, PRO-JET YELLOW 1 LIQUID, PRO-JET FAST CYAN 2 LIQUID, PRO-JET FAST MAGENTA 2 LIQUID, and PRO-JET FAST YELLOW 2 LIQUID; and various other dyes and combinations of dyes. The following examples list various water soluble organic solvents and their effect on waterfastness.

### Example 1

Preparation of dye concentrate:

| | |
|---|---|
| 10% Liquid DB-19 | 375.0 g |
| Surfynol 465 | 4.5 g |
| Dimethylamino ethanol (DMAE) | 15.0 g |
| Deionized water | 955.5 g |

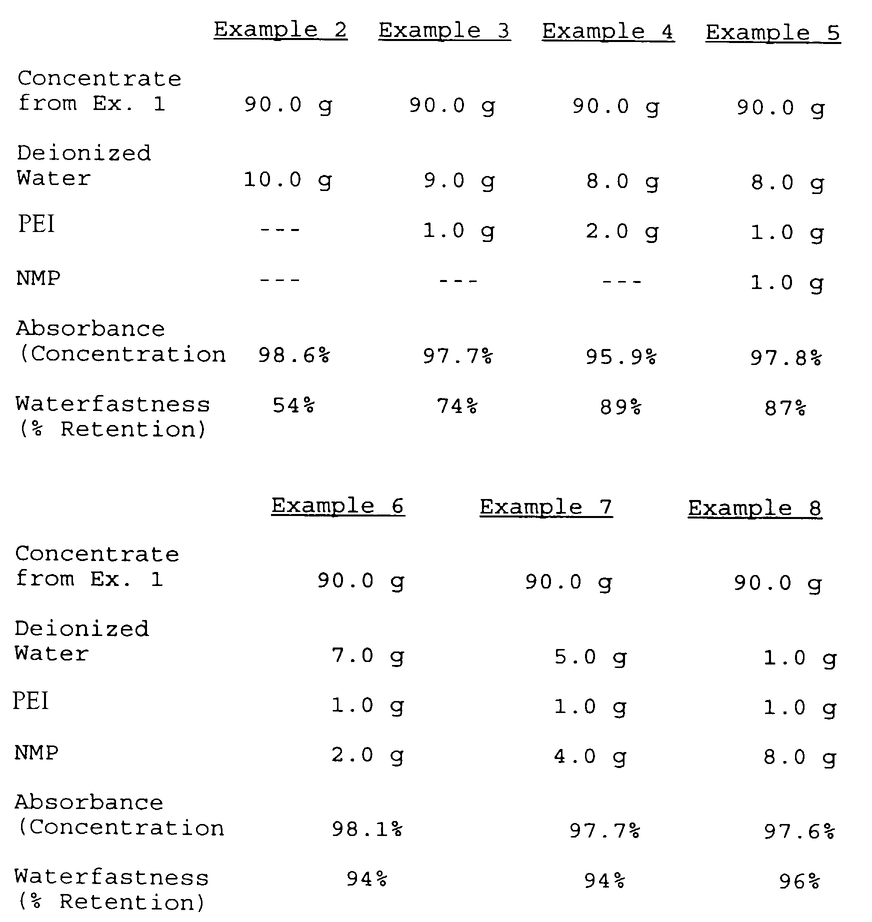

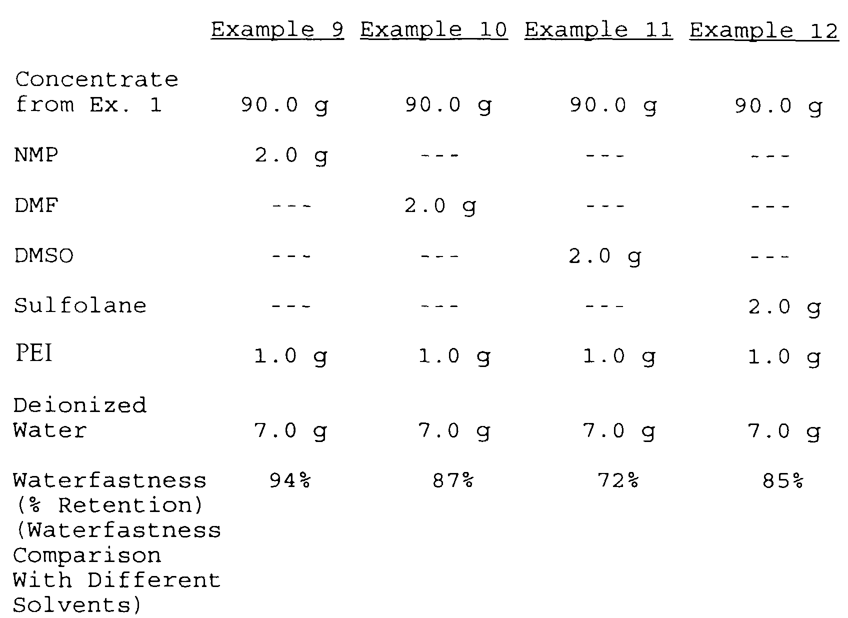

When the ink compositions were formulated as above in accordance with the present invention, the resultant ink was used in a continuous ink jet printer, such as the type manufactured by Scitex Digital Printing, Inc., in Dayton, Ohio, to test its waterfastness. The prints generated using the ink formulated in accordance herewith achieved the waterfastness indicated in the examples after soaking in water for approximately one minute. The dye in the ink jet composition according to the present invention decreases the solubility of the ink and, therefore, can be used to formulate waterfast black and subtractive primary color inks for ink jet printers.

### Industrial Applicability and Advantages

The present invention is useful in the field of ink jet printing, and has the advantage of formulating a modified dye for use in ink jet printing ink which has decreased solubility and increased waterfastness. The present invention provides the further advantage of improving runnability, since the amount of polymer is reduced from 2% to 1%.

The invention has been described in detail with particular reference to certain preferred embodiments thereof, but it will be understood that modifications and variations can be effected within the scope of the invention.

## Claims

1. An ink jet composition comprising a liquid vehicle, a dye, 1% by weight of an hydroxyethylated polyethyleneimine polymer, and 2% by weight of N-methyl-pyrrolidone.

2. An ink jet composition as claimed in claim 1, wherein the waterfastness of the ink jet composition is greater than 90%.

3. An ink jet composition as claimed in claim 1, or 2, wherein the dye comprises sulphur black 2.

4. An ink jet composition as claimed in claim 1, 2 or 3, wherein the dye is IR scannable.

5. An ink jet composition as claimed in claim 1 ,2 or 3, wherein the dye comprises a tetro-azo dye.

6. An ink jet composition as claimed in claim 5, wherein the dye comprises Direct Black 19.

7. An ink jet composition as claimed in claim 1, 2 or 3, wherein the dye comprises a subtractive primary colour dye.

## Patentansprüche

1. Zusammensetzung für den Tintenstrahldruck umfassend einen flüssigen Träger, ein Farbmittel, 1 Gew.-% eines hydroxyethylierten Polyethyleniminpolymers und 2 Gew.-% N-Methylpyrrolidon.

2. Zusammensetzung für den Tintenstrahldruck nach Anspruch 1, worin die Wasserechtheit der Zusammensetzung für den Tintenstrahldruck größer als 90% ist.

3. Zusammensetzung für den Tintenstrahldruck nach Anspruch 1 oder Anspruch 2, worin das Farbmittel Schwefelschwarz 2 umfaßt.

4. Zusammensetzung für den Tintenstrahldruck nach einem der Ansprüche 1, 2 oder 3, worin das Farbmittel IR-abtastbar ist.

5. Zusammensetzung für den Tintenstrahldruck nach einem der Ansprüche 1, 2 oder 3, worin das Farbmittel einen Tetraazofarbstoff umfaßt.

6. Zusammensetzung für den Tintenstrahldruck nach Anspruch 5, worin das Farbmittel Direktschwarz 19 umfaßt.

7. Zusammensetzung für den Tintenstrahldruck nach einem der Ansprüche 1, 2 oder 3, worin das Farbmittel einen substraktiven primären Farbstoff umfaßt.

## Revendications

1. Composition de jet d'encre comprenant un véhicule liquide, un colorant, 1% en poids d'un polymère poly(éthylène-imine) hydroxyéthylé, et 2% en poids de N-méthyl pyrrolidone.

2. Composition de jet d'encre selon la revendication 1, dans laquelle la résistance à l'eau de la composition de jet d'encre est supérieure à 90%.

3. Composition de jet d'encre selon la revendication 1 ou 2, dans laquelle le colorant comprend du Noir au Soufre 2.

4. Composition de jet d'encre selon la revendication 1, 2 ou 3, dans laquelle le colorant peut être balayé par des rayons infrarouges.

5. Composition de jet d'encre selon la revendication 1, 2 ou 3, dans laquelle le colorant comprend un colorant tétra-azoïque.

6. Composition de jet d'encre selon la revendication 5, dans laquelle le colorant comprend Noire Directe 19.

7. Composition de jet d'encre selon la revendication 1, 2 ou 3, dans laquelle le colorant comprend un colorant de couleur primaire soustractive.
